# EUROPÄISCHE PATENTSCHRIFT

(11) **EP 2 491 278 B1**
(45) Veröffentlichungstag und Bekanntmachung des Hinweises auf die Patenterteilung: **17.05.2017**
(21) Anmeldenummer: 10754460.3
(22) Anmeldetag: 09.09.2010
(51) Int. Cl.: F16J 9/06

(54) **MEHRTEILIGER KOLBENRING**
MULTI-PART PISTON RING
SEGMENT DE PISTON EN PLUSIEURS PARTIES

(30) Priorität: 19.10.2009 DE 102009049788
(43) Veröffentlichungstag der Anmeldung: 29.08.2012
(73) Patentinhaber: Federal-Mogul Burscheid GmbH, 51399 Burscheid (DE)
(72) Erfinder: MITTLER, Richard, 51379 Leverkusen (DE); SCHULTE-SASSE, Thomas, 42929 Wermelskirchen (DE); MÜLLER, Manfred, 51399 Burscheid (DE)
(74) Vertreter: Becker Kurig Straus
(86) Internationale Anmeldenummer: PCT/EP2010/063243
(87) Internationale Veröffentlichungsnummer: WO 2011/047922

(56) Entgegenhaltungen:
- DE-A1- 2 000 923
- DE-C1- 3 821 193
- DE-C1- 4 310 249
- JP-A- 9 196 171

## Beschreibung

Die Erfindung betrifft einen mehrteiligen Kolbenring.

Die DE 100 41 802 C1 offenbart einen, mit einem Stoßbereich versehenen einteiligen Kompressions-Kolbenring, der am Ringumfang Querschnittsschwächungen aufweist, wobei der Ringumfang des Kompressionskolbenrings in vier Quadranten aufgeteilt ist, wobei bei Positionierung der einen Stoßkante im ersten und der anderen Stoßkante im vierten der gedachten Quadranten die jeweilige Querschnittsschwächung ausschließlich im ersten und vierten Quadranten vorgesehen ist.

Durch die DE 12 92 447 ist ein Ölabstreifring für Brennkraftmaschinen-Kolben bekannt geworden, mit einem seine Spannung bewirkenden, in einer Ringnut ruhenden Schraubenfederring, wobei die den Schraubenfederring aufnehmende Ringnut im Bereich des Ringstoßes eine flache Ausnehmung aufweist.

In der DE 24 43 299 wird ein Ölabstreifring für einen Kolben einer Brennkraftmaschine beschrieben, mit über den Umfang verteilten Schlitzen und einer den Ölabstreifring gegen die Zylinderwandung drückenden Feder, wobei der Ölabstreifring über den gesamten Umfang ein wenigstens annähernd konstantes Flächenträgheitsmoment aufweist. Zur Erzielung des Flächenträgheitsmomentes ist an radial inneren rotationssymmetrischen Flächen des Ölabstreifringes zwischen Schlitzen Material abgetragen.

Ein Kolbenring gemäß der Präambel des Anspruchs 1 ist aus der DE 38 21 193 C1 bekannt. Der Erfindung liegt die Aufgabe zugrunde, einen mehrteiligen aus Federträger und Federelement bestehenden Kolbenring dahingehend weiterzubilden, dass durch Optimierung des Federträgers in Wirkverbindung mit dem Federelement eine Vergleichmäßigung der Radialdruckverteilung, über den gesamten Umfang des Kolbenringes gesehen, herbeigeführt werden kann. Insbesondere die Radialdruckverteilung des Kolbenringes im Zylinder unter Temperatureinfluss soll vereinheitlicht werden.

Diese Aufgabe wird gelöst durch einen mehrteiligen Kolbenring gemäß Anspruch 1. Vorteilhafte Weiterbildungen des Erfindungsgegenstandes sind den Unteransprüchen zu entnehmen.

In Analogie zum Stand der Technik gemäß DE 100 41 802 C1 kann der Kolbenring gedanklich in vier Quadranten aufgeteilt werden. Die jeweilige Tasche kann sich im ersten oder vierten Quadranten befinden. Alternativ kann sich die Tasche im zweiten oder dritten Quadranten befinden.

Ebenfalls denkbar ist, dass die Tasche in quadrantenübergreifender Weise zwischen Ringrücken und dem jeweiligen Stoßende im Federträger eingebracht ist.

Von besonderem Vorteil hinsichtlich der Radialdruckverteilung ist, wenn die Taschen im Bereich der jeweiligen Quadranten in symmetrischer Form vorgesehen sind.

Sofern die vorgeschlagene Maßnahme noch nicht ausreichen sollte, um eine optimale Radialdruckverteilung in Umfangsrichtung des Kolbenringes zu erzeugen, wird darüber hinaus vorgeschlagen, die radiale Tiefe der umlaufenden Nut, in Umfangsrichtung des Federträgers gesehen, durch Querschnittsveränderung der radialen Wandstärke ausgehend vom Nutgrund relativ zur Lauffläche des Federträgers dergestalt zu modifizieren, dass das ringförmig ausgebildete Federelement mit vorgebbarer Ovalität innerhalb der Nut positioniert ist.

Von weiterem Vorteil ist, wenn die Querschnittsveränderung der Nut lediglich im Bereich der jeweiligen Tasche des Federträgers vorgesehen wird.

Der Erfindungsgegenstand ist allgemein zunächst einmal auf jede Art von Kolbenring anzuwenden. Von besonderem Vorteil ist jedoch, den erfindungsgemäßen Kolbenring als zumindest zweiteiligen Ölabstreifring einzusetzen, da Kompressionsringe in der Regel als einteilige Kolbenringe ausgebildet werden.

Ist der erfindungsgemäße Kolbenring ein Ölabstreifring, wird darüber hinaus vorgeschlagen, den Federträger mit mindestens zwei Laufflächenstegen zu versehen.

Mit dem Erfindungsgegenstand wird die Flächenpressung auf die Zylinderwand durch die Kontaktflächen des Federträgers lokal einstellbar, und zwar durch Anpassung der Federlage sowie durch eine lokale Veränderung der Flächenträgheitsmomente des Federträgers. Hier wird lokal auf dem Umfang eine Querschnittsveränderung (lokale Veränderung der Flächenträgheitsmomente) erzeugt, die sowohl die Federlage als auch die Federkontaktkräfte auf den Federträger und damit auf die Zylinderwand vorteilhaft beeinflusst.

Temperatureinflüsse im System auf den Federträger erzeugen eine positive Ovalität im befeuerten Motorlauf. Diese positiven Ovalitäten (erhöhter Radialdruck am Ringstoßende, der auf die Zylinderwand wirkt) führen im Zylinder zu negativen Effekten, wie schlechter Ölabstreifung und Riefenbildung an der Zylinderwand. Infolge der lokalen Veränderung des Ringträgers kann die Radialdruckverteilung im Zylinder unter Temperatureinfluss vereinheitlicht werden.

Erfindungsgemäß wird somit ein federgestützter Kolbenring, insbesondere ein Ölabstreifring, mit ungleichmäßiger Radialdruckverteilung vorgeschlagen, dergestalt, dass die Radialdruckverteilung im Bereich der Stoßenden einen minimalen und im Bereich von 20 bis 120°, ausgehend vom Stoß, einen maximalen Wert annimmt. Die Wanddickenveränderung ergibt sich hierbei aus der Lagerung einer Cos-Funktion der fünften Ordnung mit dem Krümmungsradius des offenen Federträgers in der Form, dass die Radialdruckverteilung an der Lauffläche eine stetige Funktion annimmt und somit keine Sprünge aufweist.

Der Erfindungsgegenstand ist anhand eines Ausführungsbeispiels in der Zeichnung dargestellt und wird wie folgt beschrieben. Es zeigen:
- Figur 1: Prinzipskizze eines erfindungsgemäßen als Ölabstreifring ausgebildeten Kolbenrings mit angedeuteter Radialdruckverteilung ;
- Figur 2: Ölabstreifring gemäß Figur 1 mit einer das Federelement aufnehmenden Nut;
- Figur 3: Ölabstreifring gemäß Figur 1 mit, über den Umfang des Kolbenrings gesehen, sich verändender Wandstärke der das Federelement aufnehmenden Nut.

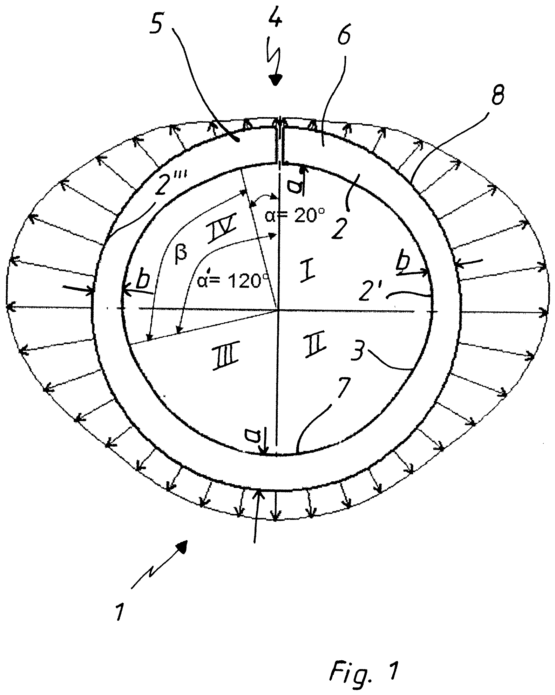

Figur 1 zeigt als Prinzipskizze einen erfindungsgemäßen als Ölabstreifring ausgebildeten Kolbenring 1 mit angedeuteter Radialdruckverteilung. Der Ölabstreifring 1 soll, wie beansprucht, zweiteilig ausgebildet werden und beinhaltet einen ringförmig ausgebildeten Federträger 2 sowie ein ebenfalls ringförmig ausgebildetes hier nur angedeutetes Federelement 3. Der Federträger 2 ist mit einem Stoß 4 versehen, so dass zwei Stoßenden 5,6 gebildet werden. Analog zum Stand der Technik ist der Kolbenring 1 in vier im Uhrzeigersinn angeordneten Quadranten I,II,III,IV aufgeteilt worden. Die Wanddicke a des Federträgers 2 ist einerseits im Bereich der Stoßenden 5,6 und andererseits im dem Stoß 4 gegenüberliegenden Ringrückenbereich 7 im Wesentlichen gleich ausgebildet. Die Radialdruckverteilung des Kolbenrings 1 ist, in Umfangsrichtung gesehen, durch Pfeile angedeutet. Es ist erkennbar, dass eine ungleichmäßige Radialdruckverteilung in Umfangsrichtung gegeben ist. Der Querschnitt des Federträgers 2 erfährt, ausgehend vom Stoß 4, im Bereich β (α > 20° bis maximal α' 120°) vom Stoß 4 eine Wanddickenveränderung b, dergestalt, dass die Radialdruckverteilung im Bereich der Stoßenden 5,6 einen minimalen und im Bereich β von einen maximalen Wert annimmt. Die Wanddickenveränderung a - b ergibt sich aus der Überlagerung einer Cos-Funktion der fünften Ordnung mit dem Krümmungsradius des offenen Federträgers 2 in der Form, dass die Radialdruckverteilung an der Lauffläche 8 eine stetige Funktion annimmt und somit keine Sprünge aufweist.

Der Umfangsbereich α - α' wird hierbei durch Bildung von Taschen 2',2" erzeugt, womit die Wanddickenreduzierung a-b einhergeht.

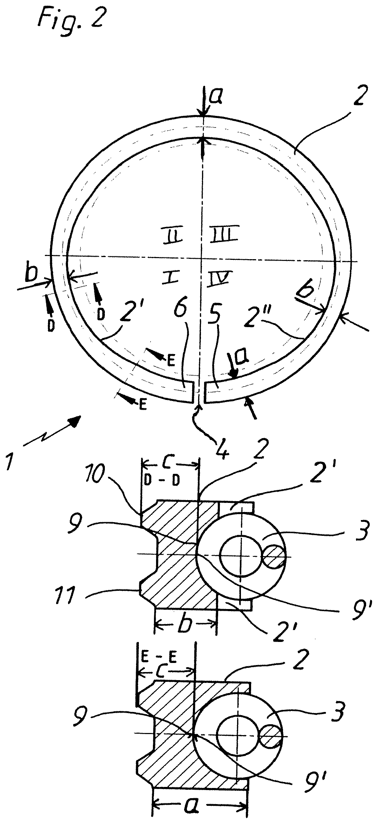

Figur 2 zeigt den Kolbenring 1 gemäß Figur 1 in verschiedenen Ansichten bzw. Schnitten. Gleiche Bauteile werden mit gleichen Bezugszeichen versehen. Dargestellt ist der ringförmig ausgebildete Federträger 2 sowie das ebenfalls ringförmig ausgebildete Federelement 3, das in einer umlaufend ausgebildeten Nut 9 des Federträgers 2 eingebracht ist. In Analogie zu Figur 1 ist erkennbar, dass der Kolbenring 1 in vier Quadranten I bis IV aufgeteilt ist. Der Stoß ist mit dem Bezugszeichen 4 versehen. Der Kolbenring 1 weist in diesem Beispiel zwei Laufflächenstege 10,11 auf. In den Schnitten D-D und E-E ist erkennbar, dass der Bereich der Stoßenden 5,6 die volle Wanddicke a beinhaltet. Die Wanddickenreduzierung von a in Richtung b beginnt in Analogie zu Figur 1 bei einem Winkel α von 20° und erstreckt sich, ausgehend vom Stoß 4, über einen Winkel α' von 120°. Die minimale Wanddicke b ist im Schnitt D-D der Figur 2 erkennbar. Die Wandstärke c, ausgehend vom Nutgrund 9' der umlaufend ausgebildeten Nut 9 bis hin zu den Laufstegen 10,11 bleibt, in Umfangsrichtung gesehen, hierbei unverändert.

Die in Figur 1 angedeuteten Taschen 2',2" sind hier ebenfalls erkennbar.

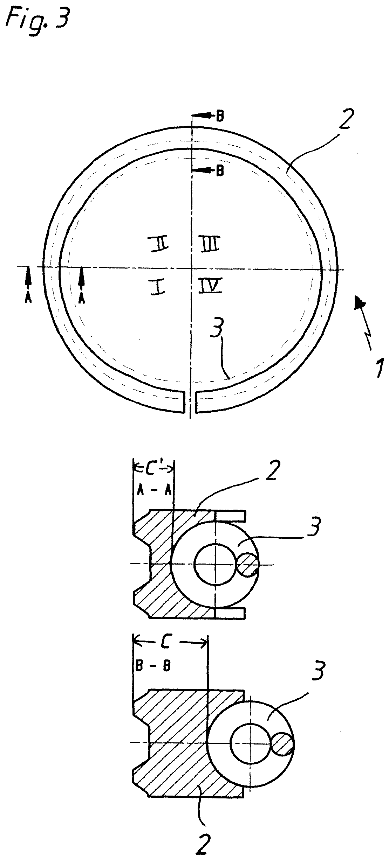

Anders ist dies bei Figur 3. Hier ist dargestellt, dass sich die Wandstärke c (Schnitt A-A, B-B) vom zweiten in den ersten Quadranten zur Wandstärke c' reduziert.

## Patentansprüche

1. Mehrteiliger Kolbenring (1), beinhaltend einen zumindest einteiligen, mit einem Stossbereich (4) versehenen Federträger (2) sowie ein zumindest einteilig ausgebildetes Federelement (3), das in einer im Bereich der inneren Umfangsfläche des Federträgers (2) vorgesehenen Nut (9) positioniert ist, wobei die Wanddicke (a) des Federträgers (2) sowohl im Bereich der dem Stoss (4) zugewandten Enden (5,6) des Federträgers (2) als auch in dessen gegenüberliegenden Rückenbereich (7) im Wesentlichen gleich ausgebildet ist, **dadurch gekennzeichnet, dass** zwischen dem Rückenbereich (7) und den Stossenden (5,6) jeweils mindestens eine, sich über einen Umfangsbereich (β) von mindestens 60° erstreckende, durch lokale Wanddickenreduzierung (a-b) des Federträgers (2) erzeugte Tasche (2', 2") vorgesehen ist, wobei zur Erzeugung einer ungleichmässigen Radialdruckverteilung der Querschnitt des Federträgers (2), ausgehend vom Stoss (4), in einem Umfangsbereich β zwischen α > 20° bis α' von max. 120° die Wanddickenreduzierung (a-b) erfährt, dergestalt, dass die Radialdruckverteilung im Bereich der Stossenden (5,6) einen minimalen und im Bereich β einen maximalen Wert annimmt.

2. Kolbenring nach Anspruch 1, **dadurch gekennzeichnet, dass** der Federträger (2), ausgehend vom Stoss (4), in vier Quadranten (I-IV) aufgeteilt wird und sich die jeweilige Tasche (2',2") im ersten (I) und vierten Quadranten (IV) befindet.

3. Kolbenring nach Anspruch 1, **dadurch gekennzeichnet, dass** der Federträger (2), ausgehend vom Stoss (4), in vier Quadranten (I-IV) aufgeteilt wird und sich die jeweilige Tasche (2',2") im zweiten (II) und dritten Quadranten (III) befindet.

4. Kolbenring nach Anspruch 1 , **dadurch gekennzeichnet, dass** der Federträger (2), ausgehend vom Stoss (4), in vier Quadranten (I-IV) aufgeteilt wird und sich die jeweilige Tasche (2',2") in einem Umfangsbereich des Federträgers (2) befindet, der sowohl den ersten (I) und zweiten (II) als auch den dritten (III) und vierten Quadranten (IV) überdeckt.

5. Kolbenring nach einem der Ansprüche 1 bis 4, **dadurch gekennzeichnet, dass** die Taschen (2',2") im Bereich der jeweiligen Quadranten (I-IV) in symmetrischer Form vorgesehen sind.

6. Kolbenring nach einem der Ansprüche 1 bis 5, **dadurch gekennzeichnet, dass** die radiale Tiefe der umlaufenden Nut (9), in Umfangsrichtung des Federträgers (2) gesehen, durch Querschnitts Veränderung der radialen Wandstärke (c-c') ausgehend vom Nutgrund (9') relativ zur Lauffläche (10, 11) des Federträgers (2) dergestalt modifiziert ist, dass das ringförmig ausgebildete Federelement (3) mit vorgebbarer Ovalität innerhalb der umlaufend ausgebildeten Nut (9) positionierbar ist.

7. Kolbenring nach Anspruch 6, **dadurch gekennzeichnet, dass** die Querschnittsveränderung (c-c') der Nut (9) im Bereich der jeweiligen Tasche (2' ,2") des Federträgers (2) vorgesehen ist.

8. Kolbenring nach einem der Ansprüche 1 bis 7, gebildet durch einen zumindest zweiteiligen Ölabstreifring (1).

9. Kolbenring nach Anspruch 8, **dadurch gekennzeichnet, dass** der Federträger (2) mindestens zwei Laufflächenstege (10, 11) aufweist.

## Claims

1. A multi-part piston ring (1), containing an at least single-part spring support (2), which is provided with a piston ring joint region (4), as well as an at least single-part spring element (3), which is positioned in a groove (9) provided in the region of the inner circumferential face of the spring support (2), wherein the wall thickness (a) of the spring support (2) is essentially equal in both the region of the ends (5, 6) of the spring support (2) facing the piston ring joint (4) and the opposite rear region (7) of the spring support, **characterized in that** at least one pocket (2', 2"), which extends over a circumferential region (p) of at least 60° and is created by local reduction of the wall thickness (a-b) of the spring support (2), is provided in each case between the rear region (7) and the piston ring joint ends (5, 6), wherein, in order to create a non-uniform radial pressure distribution, the cross section of the spring support (2), starting from the piston ring joint (4), undergoes the reduction in wall thickness (a-b) in a circumferential region β from α > 20° to α' of max. 120° in such a manner that the radial pressure distribution assumes a minimum value in the region of the piston ring joint ends (5, 6) and a maximum value in the region β.

2. The piston ring according to Claim 1, **characterised in that** the spring support (2), starting from the piston ring joint (4), is divided into four quadrants (I-IV) and the respective pocket (2', 2") is situated in the first (I) and fourth (IV) quadrant.

3. The piston ring according to Claim 1, **characterised in that** the spring support (2), starting from the piston ring joint (4), is divided into four quadrants (I-IV) and the respective pocket (2', 2") is situated in the second (II) and third (III) quadrant.

4. The piston ring according to Claim 1, **characterised in that** the spring support (2), starting from the piston ring joint (4), is divided into four quadrants (I-IV) and the respective pocket (2', 2") is situated in a circumferential region of the spring support (2) which covers both the first (I) and second (II) and the third (III) and fourth (IV) quadrants.

5. The piston ring according to one of Claims 1 to 4, **characterised in that** the pockets (2', 2") are provided symmetrically in the region of the respective quadrants (I-IV).

6. The piston ring according to Claims 1 to 5, **characterised in that** the radial depth of the circumferential groove (9), as seen in the circumferential direction of the spring support (2), is modified by changing, starting from the ground of the groove (9'), the cross section of the radial wall thickness (c-c') relative to the running surface (10, 11) of the spring support (2) in such a manner that the annular spring element (3) can be positioned with a predefinable ovality inside the circumferential groove (9).

7. The piston ring according to Claim 6, **characterised in that** the cross-sectional change (c-c') of the groove (9) is provided in the region of the respective pocket (2', 2") of the spring support (2).

8. The piston ring according to one of Claims 1 to 7, formed by an at least two-part oil scraper ring (1).

9. The piston ring according to Claim 8, **characterised in that** the spring support (2) has at least two running surface webs (10, 11).

## Revendications

1. Segment de piston en plusieurs parties (1), contenant un support de ressort (2) au moins en une seule partie, pourvu d'une zone de butée (4) ainsi qu'un élément de ressort (3) conçu au moins en une seule partie, qui est positionné dans une rainure (9) prévue dans la zone de la surface circonférentielle intérieure du support de ressort (2), dans lequel l'épaisseur de paroi (a) du support de ressort (2) est conçue de manière essentiellement égale tant dans la zone des extrémités (5, 6) tournées vers la butée (4) du support de ressort (2) que dans la zone arrière (7) en vis-à-vis de ces dernières, **caractérisé en ce que** entre la zone arrière (7) et les extrémités de butée (5, 6) respectivement au moins une poche (2', 2'') produite par une réduction d'épaisseur de paroi local (a-b) du support de ressort (2), s'étendant sur une zone circonférentielle (β) d'au moins 60°, dans lequel pour produire une répartition de pression radiale non uniforme, la section transversale du support de ressort (2), à partir de la butée (4), subit la réduction d'épaisseur de paroi (a, b) dans une zone circonférentielle β entre α > 20° jusqu'à α' de 120° au maximum, de telle sorte que la répartition de pression radiale dans la zone des extrémités de butée (5, 6) adopte une valeur minimale et une valeur maximale dans la plage β.

2. Segment de piston selon la revendication 1, **caractérisé en ce que** le support de ressort (2), à partir de la butée (4), est divisé en quatre quadrants (I-IV) et la poche respective (2', 2'') se trouve dans le premier (I) et le quatrième (IV) quadrant.

3. Segment de piston selon la revendication 1, **caractérisé en ce que** le support de ressort (2), à partir de la butée (4), est divisé en quatre quadrants (I-IV) et la poche respective (2', 2'') se trouve dans le deuxième (II) et le troisième (III) quadrant.

4. Segment de piston selon la revendication 1, **caractérisé en ce que** le support de ressort (2), à partir de la butée (4), est divisé en quatre quadrants (I-IV) et la poche respective (2', 2'') se trouve dans une zone circonférentielle du support de ressort (2), qui recouvre tant le premier (I) et le deuxième (II) que le troisième (III) et quatrième (IV) quadrants.

5. Segment de piston selon une des revendications 1 à 4, **caractérisé en ce que** les poches (2', 2") sont prévus en forme symétrique au niveau des quadrants respectifs (I-IV).

6. Segment de piston selon une des revendications 1 à 5, **caractérisé en ce que** la profondeur radiale de la rainure circonférentielle (9), vue dans la direction circonférentielle du support de ressort (2), est modifiée par modification de l'épaisseur de paroi radiale (c-c') de la section transversale à partir du fond de rainure (9') par rapport à la surface de roulement (10, 11) du support de ressort (2), de telle sorte que l'élément de ressort (3) conçu de manière annulaire avec une ovalité prescrite puisse être positionné à l'intérieur de la rainure (9) conçue de manière circonférentielle.

7. Segment de piston selon la revendication 6, **caractérisé en ce que** la modification de section transversale (c-c') de la rainure (9) est prévue au niveau de la poche respective (2', 2") du support de ressort (2).

8. Segment de piston selon une des revendications 1 à 7, formé par un segment racleur d'huile (1) au moins en deux parties.

9. Segment de piston selon la revendication 8, **caractérisé en ce que** le support de ressort (2) présente au moins deux gradins de surface de roulement (10, 11).
